# EUROPEAN PATENT SPECIFICATION

(11) **EP 0 672 346 B1**
(45) Date of publication and mention of the grant of the patent: **06.11.2002**
(21) Application number: 95101923.1
(22) Date of filing: 01.08.1991
(51) Int. Cl.: A01N 25/30, A01N 25/32, B01F 17/00

(54) **New surfactant compositions, method for their preparation, and pesticidal compositions containing same**
Neue Tensidezusammensetzungen, Verfahren zu ihrer Herstellung und diese enhaltende Pestizidezusammensetzungen
Compositions tensio-actives nouvelles, méthode pour leur préparation et compositions les contenant

(30) Priority: 09.08.1990 US 565816
(43) Date of publication of application: 20.09.1995
(62) Divisional of application: 91307074.4
(73) Proprietor: Monsanto Technology LLC, St. Louis, Missouri 63167 (US)
(72) Inventor: Berger, Paul D., Sugar Land, Texas 77478 (US); Jimenez, Antonio M., Missouri, Texas 77489 (US)
(74) Representative: Bosch, Henry

(56) References cited:
- EP-A- 0 006 348
- EP-A- 0 299 654
- GB-A- 2 049 427

## Description

### Background of the Invention

The present invention generally relates to novel surfactant compositions, their preparation and to compositions containing these novel surfactant compositions together with a pesticide, particularly a herbicide. More particularly, an important aspect of this invention is directed to surfactant compositions having reduced eye irritancy which are useful in the preparation of herbicidal compositions having reduced eye irritation properties in addition to their herbicidal effectiveness.

Numerous organic pesticides; i.e. chemicals that are useful in the control of bacteria, insects, fungi, weeds and the like, have been developed in recent years. These pesticides, especially herbicides, have found use in agriculture as well as for household applications. Regardless of whether the pesticide is water soluble or water insoluble, it is desirable to use it in an aqueous medium rather than in a non-aqueous solvent which is more difficult to use by the formulator and applicator, could cause environmental damage, is more costly and is in general undesirable. Water dispersions, emulsions and/or solutions can be prepared from most pesticides using selected surfactants. Proper selection of the surfactant can also improve the efficacy of the pesticidal composition.

Surfactants are useful in the preparation of herbicidal compositions whether the herbicide is water soluble or insoluble. When the herbicide is water insoluble, the surfactant can be used to make a water dispersible herbicide composition. When the herbicide is water soluble, the surfactant can often be used to improve the herbicidal effectiveness of the herbicidal composition.

One classification of surfactants that has found success in the preparation of herbicidal compositions are the polyoxyalkylene alkylamines such as, for example, ethoxylated tallowamine. These compounds have the necessary surface activity so that many otherwise water insoluble as well as water soluble herbicides can be formulated into concentrates which will form useful dispersions, emulsions and solutions in water. Herbicides formulated into dispersions, emulsions and solutions using these surfactants have exceptional herbicidal properties.

While the polyoxyalkylene alkylamine compounds have excellent surfactant properties which enhance the efficacy of the toxicant they may also be eye irritants.

Reducing or eliminating the eye irritancy of surfactants used with pesticides, without reducing the efficacy of the pesticidal compositions containing the surfactants, is highly desirable. The protection of the applicator and personnel preparing the surfactant and pesticidal compositions is of paramount importance. Reducing the eye irritancy of the surfactant and pesticidal compositions containing the surfactant, increases the use that can be made of such products while lessening the possibility of injury to personnel handling and using them.

In order to obtain surfactant compositions having the desired characteristics needed for use with the numerous pesticides on the market, various combinations of surfactants have been previously made.

U.S. Pat. No. 4,313,847 et al. describes three component surfactant compositions including a polyoxyalkylene alkyl or alkylaryl ether phosphate ester, a polyoxyalkylene alkylamine and a material selected from the group consisting of nonionic polyoxylated surfactants, polyhydric alcohol esters and polyoxyalkylene glycols. According to this patent, the three component composition is an improved emulsifier enhancing the use of the emulsion.

Combinations of emulsifiers are also shown in the following patents: U.S. Pat. No. 2,872,368 discloses a polyoxyethylene glycol or a polyoxypropylene glycol in combination with an oil soluble alkaline earth metal salt of an alkylated naphthalene sulfonic acid; U.S. Pat. No. 3,,683.078 discloses emulsifier compositions having three components: 1) the condensation product of an alkylphenol and an alkylene oxide, 2) a sulfonate salt and 3) a polyoxyalkylene derivative of an alkanol and U.S. Pat. No. 3,071,550 discloses selected sulfonates in combination with an aliphatic diester of unsaturated carboxylic acids and the condensation product of glycerine and from 15 to 27 moles of ethylene oxide. Reference is also made to EP-0 006 348.

AS stated in British Patent No. 769,736, due to the diverse nature of pesticides, the selection of the proper emulsifying agent in any particular instance is difficult. This patent shows combinations of a surface active alkylaryl polyoxyalkylene glycol ether and a water soluble salt of a phosphate or sulfate ester of one of the ethers. This British patent, like the preceding patents shows the continuing need for a multitude of surfactants many obtained by combinations of known materials.

EP-A-0 299 654 relates to compositions suitable for use as compatibility agents and that consist of a glycoside as well as a polyoxyalkylene alkylamine containing 20 moles of alkylene oxide, preferably tallow amine, a polyoxyalkylene alkyl or alkylaryl ether phosphoric acid ester, inter alia, polyoxyethylene(9)-p-nonylphenylphosphoric acid monoester and a glycol. Pesticide formulations are also disclosed.

None of the foregoing patents discusses the problem of surfactants being eye irritants. Yet this is a factor which must be taken into consideration when preparing and using compositions containing surfactants. Thus there exists an important need for surfactants having the desired efficacy and reduced eye irritancy.

It is therefore an object of the present invention to provide new surfactant compositions.

Another object of the present invention is to provide new surfactant compositions that can be used to prepare pesticidal compositions particularly herbicidal compositions having reduced eye irritancy.

Another object of the present invention is to provide new methods for the preparation of surfactant compositions having reduced eye irritancy.

Another object of the present invention is to provide pesticidal compositions that have significantly reduced eye irritancy.

Another object of the present invention is to provide herbicidal compositions that have significantly reduced eye irritancy.

Another object of the present invention is to provide new methods for controlling the growth of weeds.

Other objects of the present invention will become apparent from the following description:

### Summary of the Invention

The present invention is directed to a surfactant composition comprising a polyoxyalkylene alkylamine having at least 7 moles of an alkylene oxide group and reduced eye irritancy. An important embodiment of this invention is a surfactant composition comprising a polyoxyalkylene alkylamine containing at least 7 moles of an alkylene oxide group and eye irritant reducing compounds such as sulfated polyoxyalkylene alkylphenol; alcohol sulfates; polyoxyalkylene alcohol sulfates; mono- and dialcohol phosphates; mono- and di-(polyoxyalkylene alcohol) phosphates; polyoxyalkylene alkylphenol carboxylates or polyoxyalkylene alcohol carboxylates, said eye irritant reducing compounds containing up to 60 moles of an alkylene oxide group and alkyl and alcohol groups having from 8 to 20 carbon atoms.

A glycol can be present in the surfactant composition in order to improve the solubility of the surfactant composition. The glycol can be formed in situ during the preparation of the polyoxyalkylene alkylamine or the glycol can be added to the amine or the surfactant composition.

Also the present invention contemplates pesticidal compositions, particularly herbicidal compositions other than aqueous solutions of glyphosate herbicide, comprising a pesticide such as a herbicide and the aforedescribed surfactant composition. These compositions are readily dispersible in water so as to prepare aqueous compositions useful for the control of weeds, insects, fungi and the like.

### Detailed Description of the Invention

The surfactant compositions of the present invention comprise a polyoxyalkylene alkylamine having at least 7 moles of an alkylene oxide group, said surfactant composition having an eye irritancy lower than the eye irritancy of said polyoxyalkylene alkyl amine.

one method for reducing the eye irritancy of the polyoxyalkylene alkylamine is to blend it with an effective amount of an eye irritant reducing compound. Examples of compounds useful for this purpose are sulfated polyoxyalkylene alkylphenol; alcohol sulfates and polyoxyalkylene alcohol sulfates; mono- and dialcohol phosphates; mono- and di-(polyoxyalkylene alcohol) phosphates; polyoxyalkylene alkylphenol carboxylates and polyoxyalkylene alcohol carboxylates, said eye irritant reducing compound containing up to 60 moles of an alkylene oxide group and alkyl and alcohol groups having from 8 to 20 carbon atoms.

In the embodiments using sulfated polyoxyalkylene alkylphenol as the eye irritant reducing compound for the polyoxyalkylene alkylamine, two components of the surfactant composition are polyoxyalkylene derivatives.

Such materials are often referred to as an alkoxylated product or an alkylene oxide product. Often these alkylene oxide products are mixtures of compounds containing different numbers of alkylene oxide groups, of which one predominates, being accompanied by smaller proportions of products containing larger and smaller numbers of the alkylene oxide groups in the polyoxyalkylene portion of the molecule.

The polyoxyalkylene alkylamines are commercially available materials, being used as surfactants for the preparation of pesticidal compositions, particularly herbicidal compositions. These materials can be prepared by reacting an alkylene oxide, preferably ethylene and/or propylene oxide with an alkylamine, preferably an alkylamine containing from 8 to 20 carbon atoms. These amines are generally derived from naturally occurring products such as tallow, coconut, soybean or cotton seed oils and as such are mixtures of amines. A preferred amine is tallowamine. The polyoxyalkylene derivatives are prepared by reacting the alkylene oxide with the alkylamine at elevated temperatures and pressure. Procedures for carrying out these reactions are known to those skilled in the art.

A generalized structural representation of the polyoxyalkylene alkylamines is as follows: 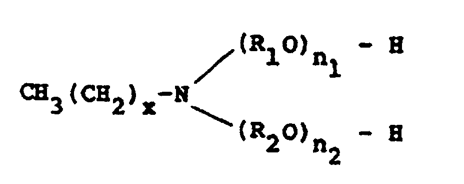 wherein x is a number from 7 to 19; n₁ and n₂ are numbers independently selected from 1 to about 30, preferably from 4 to 9, and the sum of n₁ and n₂ is greater than 4; and R₁ and R₂ are independently selected from alkyl, preferably having from 2 to 4 carbon atoms.

The amount of alkylene oxide used in the preparation of this component of the surfactant composition varies with the ultimate use of the surfactant composition. Normally up to about 60 moles of oxyalkylene groups in the polyoxyalkylene alkylamine are satisfactory, with from 4 to 20 moles preferred, and from 7 to 8 moles of oxyalkylene groups most preferred.

The sulfated polyoxyalkylene alkylphenol can be prepared by first alkoxylating an alkylphenol and then reacting the alkoxylated alkylphenol with sulfur trioxide. One procedure for its preparation is to contact a mixture of air and sulfur trioxide with the alkoxylated alkylphenol in a falling film reactor. Other procedures that may be used are reactions with oleum or with chlorosulfonic acid. This reaction will cause the formation of sulfate groups on the alkoxylated portion of the molecule and sulfonate groups on the phenol ring. The preparation of the sulfated polyoxyalkylene alkylphenol can produce product having from 0 to 30 or more weight percent sulfonate on its phenol ring. For many purposes it is preferred that there be present at least about 3 weight percent sulfonate in the sulfated polyoxyalkylene alkyl phenol. A generalized structural representation of the predominant component of the sulfated polyoxyalkylene containing ring sulfonation is as follows: 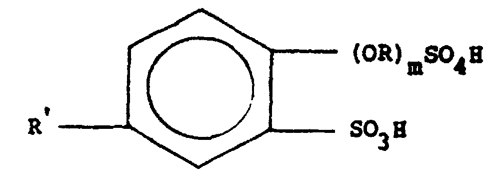 wherein m is a number up to 60, preferably preferably less than 10 and more preferably at least 4 and R is alkyl having from 2 to about 4 carbon atoms, preferably 2, and R' is alkyl having about 8 to about 20 carbon atoms, preferably 9 carbon atoms.

The amount of alkylene oxide used in the preparation of this component of the surfactant composition varies with the ultimate use of the surfactant composition. Normally there can be up to 30 or more moles of alkylene oxide in the sulfated polyoxyalkylene alkylphenol. For certain agricultural application it is preferred to have from 4 to 14 or more moles of the alkylene oxide group. For specific uses it is preferred that there be present less than 10 moles of alkylene oxide groups and preferably 4 moles of alkylene oxide groups, most preferably 4 moles of ethylene oxide in the sulfated polyoxyalkylene alkylphenol.

The alkyl group in the alkylphenol moiety can comprise from 8 to 20 carbon atoms. A preferred alkyl is nonyl due to the availability and properties of surfactants having this moiety. It should be understood that for specific applications, alkylphenol moieties containing more or fewer carbon atoms can be used.

In order to obtain the desired results, the sulfated polyoxyalkylene alkylphenol preferably contains at least 3 weight percent of sulfonate. This component can contain up to 30 weight percent or more of sulfonate. For certain applications sulfated polyoxyalkylene compounds containing about 15 weight percent sulfonate can be effectively used in the present surfactant compositions.

Other eye irritant reducing compounds can also be used to reduce the eye irritancy of the polyoxyalkylene alkylamines. Alcohol sulfates and polyoxyalkylene alcohol sulfates having from 8 to 18 carbon atoms and up to 12 moles of alkoxyalkylene group are particularly useful. As with the sulfated polyoxyalkylene alkylphenol and the polyoxyalkylene alkylamines, it is preferred that the alkylene oxide groups in the polyoxyalkylene alcohol sulfates be ethylene oxide groups. Oxyalkylene groups from 2 to 4 carbon atoms are often used. While there can be 30 or more moles of an oxyalkylene group in the polyoxyalkylene alcohol sulfate, polyoxyalkylene alcohol sulfate preferably contains about 3 moles of alkylene oxide groups, preferably 3 moles of ethylene oxide groups.

Mono- and dialcohol phosphates; mono- and di-(polyoxyalkylene alcohol) phosphates; polyoxyalkylene alkylphenol carboxylates and polyoxyalkylene alcohol carboxylates are additional eye irritant reducing compounds that can be used to reduce the eye irritancy of the-polyoxyalkylene alkylamines.

These compounds can contain from 8 to 20 carbon atoms in their alkyl and alcohol groups and up to 30 moles of alkylene oxide, preferably ethylene oxide in each polyoxyalkylene alcohol or polyoxyalkylene phenol group. As with the sulfated polyoxyalkylene alkylphenol, it is preferred that the polyoxyalkylene alkylphenol carboxylates be polyoxyethylene nonylphenol carboxylates.

These carboxylate and phosphate components are available materials which can be readily prepared by methods known in the art.

By varying the components used in the preparation of the phosphate, it is possible to maximize the presence of mono- or diester. Often the phosphates are mixtures of the mono- and diesters. The preference for the mono- or diester of phosphoric acid depends upon variables such as the ultimate use of the surfactant composition, the identity of the pesticide, the intended use of the pesticide composition and other factors. U.S. Patent No. 4.313.847 describes the preparation of the phosphates.

Certain of the eye irritant reducing components of the present surfactant compositions are commercial materials. C₈-C₁₀ alcohol phosphates and sulfated nonyl phenol containing 4 moles of ethylene oxide have been marketed by Witco Corp. under the names EMPHOS PS-400, and WITCONATE D-51-29 respectively. (EMPHOS and WITCONATE are trademarks of Witco Corp.)

In general the surfactant composition comprises a major amount of the polyoxyalkylene alkylamine and an effective amount of the selected eye irritant reducing compound. The eye irritant reducing compound is present in the surfactant composition in an effective amount sufficient to reduce the eye irritant properties of the polyoxyalkylene alkylamine. When the eye irritant reducing compound is a sulfated polyoxyalkylene alkylphenol, preferred surfactant compositions can contain from 50 to 95 weight percent, preferably 80 to 85 weight percent, of the polyoxyalkylene alkylamine and from 5 to 50 weight percent of the eye irritant reducing component. The optimum amount of each component in the surfactant blend depends on variables such as the identity of the eye irritant reducing compound, the identity of the pesticide, the type of application of the pesticide composition, storage and transportation of the surfactant and pesticide compositions, the conditions of use of the pesticidal composition, etc.

The surfactant composition of the present invention can contain optional components to improve the water solubility of the surfactant composition. The need for such components will depend upon several factors, especially the identity of the surfactants comprising the composition. Among compounds useful for improving the water solubility of the surfactant composition are glycols. Glycols are of particular use for this function due to their solubility in water. The readily available glycols, ethylene glycol, propylene glycol, polyethylene glycol and polypropylene glycol are satisfactory for this function although other glycols can also be used. Other organic compounds with high water solubility will also be useful in certain instances.

While the glycol can be added to the surfactant composition with mixing, its use therein is independent of the method of its introduction into the surfactant composition. Thus, for example, it can be introduced into the surfactant composition with the polyoxyalkylene alkylamine component. This is often a preferred method since the glycol can be made during the manufacture of the polyoxyalkylene alkylamine component as a byproduct of the alkoxylation reaction. Other procedures for obtaining and introducing the optional glycol component can be used.

Most of the individual components discussed above are liquids at room temperatures. However, in the case of those materials containing a large polyoxyalkylene chain, some of the materials may be waxy at room temperature and if this is the case, the materials can be heated prior to mixing. The surfactant compositions of the present invention can be prepared by blending the components. Any suitable equipment, such as a conventional mixer, may be used. The order of adding the materials generally is not critical and thus they may be blended in any convenient order. As mentioned above, the amounts of the individual components utilized can be varied somewhat depending upon a variety of factors, particularly the ultimate application of the composition.

Surfactant compositions of the present invention are useful in the preparation of pesticidal compositions, particularly herbicidal compositions other than aqueous solutions of glyphosate herbicide.

In general, a herbicidal composition known as a concentrate is first prepared. This composition in essence contains a herbicide and surfactant. Often it includes a minor amount of solvent, such as water. The ratio of herbicide to surfactant will depend on many factors, including the identity of the components and the ultimate use. Usually the surfactant will comprise from about 5 to about 25 weight percent of this composition. The concentrate can then be diluted with water to form an aqueous herbicidal composition ready for use. The present herbicidal compositions are not limited to a particular herbicide or mixture of herbicides. They may be used with a variety of pesticides, including, dicamba, trifluoralin, chlorpyrifos, alachlor, 2,4-D, malathion, diazinon, 2, 4, 5-T, atrazine, simazine, amiben, fenac, dimethyl 2, 3, 5, 6-tetrachloroterephthalate, diuron, linuron, propanil, and others.

The pesticidal compositions previously described can be diluted with water to form an aqueous pesticidal composition which can be sprayed or otherwise applied to the desired area.

The relative amounts of herbicide, water and surfactant in the aqueous herbicidal compositions of this invention will vary depending upon many factors including but not limited to the identity and properties of the herbicide, method of application, locus to which the herbicide is applied, etc.
It has been found that in general satisfactory aqueous herbicidal compositions comprise from 0.25 to 2.5% or more by weight of herbicide, from 0.25 to 1% or more by weight of the surfactant composition, and from 96.5% to 99.5% by weight of water. These compositions useful in agriculture and related application can be prepared by adding water to pesticidal compositions comprising the pesticide and the present surfactant. The surfactant and pesticide can be combined using standard equipment for the blending of compositions.

## Claims

1. A surfactant composition comprising a polyoxyalkylene alkylamine containing at least 7 moles of an alkylene oxide group, and an eye irritancy reducing amount of a compound which is a sulfated polyoxyalkylene alkylphenol; an alcohol sulfate; a polyoxyalkylene alcohol sulfate; a mono- or dialcohol phosphate; a mono- or di-(polyoxyalkylene alcohol) phosphate; mono- and di-(polyoxyalkylene alkylphenol)phosphates; a polyoxyalkylene alkylphenol carboxylate or polyoxyalkylene alcohol carboxylate; the eye-irritant-reducing compound containing up to about 60 moles of an alkylene oxide group and alkyl and alcohol groups having from about 8 to about 20 carbon atoms; with the proviso that when said compound is a polyoxyalkylene alkyl or alkylaryl ether phosphate ester, the composition does not include any further nonionic polyoxyalkylated surfactant or glycol.

2. The surfactant composition of claim 1 wherein the polyoxyalkylene alkylamine is a polyoxyethylene tallowamine containing up to 20 moles of ethylene oxide which comprises from 50 to 95 weight percent of the composition.

3. The surfactant composition of claim 2 wherein the polyoxyethylene tallowamine comprises from 80 to 95 weight percent of the surfactant composition.

4. The surfactant composition of any of the preceding claims which also comprises an effective solubilizing amount of a glycol.

5. A pesticidal composition of matter comprising a pesticide other than glyphosate herbicide and a surfactant composition according to any preceding claim.

6. A method of controlling the growth of weeds which comprises applying to said weeds a herbicidal composition of claim 5 where the pesticide is a herbicide.

7. Use of a compound which is a sulfated polyoxyalkylene alkylphenol; an alcohol sulfate; a polyoxyalkylene alcohol sulfate; a mono- or dialcohol phosphate; a mono- or di-(polyoxyalkylene alcohol) phosphate mono- and di-(polyoxyalkylene alkylphenol)phosphates; a polyoxyalkylene alkylphenol carboxylate or polyoxyalkylene alcohol carboxylate; the eye-irrirtant-reducing compound containing up to about 60 moles of an alkylene oxide group and alkyl and alcohol groups having from 8 to 20 carbon atoms, for reducing the eye irritancy of a surfactant composition comprising a polyoxyalkylene alkylamine containing at least 7 moles of an alkylene oxide group, or of a pesticidal composition comprising a pesticide other than glyphosate herbicide and a polyoxyalkylene alkylamine containing at least 7 moles of an alkylene oxide group.

## Patentansprüche

1. Tensidzusammensetzung, umfassend ein Polyoxyalkylenalkylamin, enthaltend mindestens 7 Mole einer Alkylenoxidgruppe, und eine die Augenreizbarkeit reduzierende Menge einer Verbindung, bei der es sich um ein sulfatiertes Polyoxyalkylenalkylphenol; ein Alkoholsulfat; ein Polyoxyalkylenalkoholsulfat; ein Mono- oder Dialkoholphosphat; ein Mono- oder Di-(polyoxyalkylenalkohol)-phosphat; Mono- und Di-(polyoxyalkylenalkylphenol)-phosphate; ein Polyoxyalkylenalkylphenolcarboxylat oder Polyoxyalkylenalkoholcarboxylat handelt; wobei die die Augenreizbarkeit reduzierende Verbindung bis zu etwa 60 Mole einer Alkylenoxidgruppe und Alkyl- und Alkoholgruppen mit etwa 8 bis etwa 20 Kohlenstoffatomen enthält; mit der Maßgabe, dass wenn die besagte Verbindung ein Polyoxyalkylenalkyl- oder Alkylaryletherphosphatester ist, die Zusammensetzung kein weiteres nichtionisches polyoxyalkyliertes Tensid oder Glykol beinhaltet.

2. Tensidzusammensetzung nach Anspruch 1, wobei das Polyoxyalkylenalkylamin ein Polyoxyethylentalgamin ist, das bis zu 20 Mole Ethylenoxid enthält, und welches 50 bis 95 Gew.-% der Zusammensetzung umfasst.

3. Tensidzusammensetzung nach Anspruch 2, wobei das Polyoxyethylentalgamin 80 bis 95 Gew.-% der Tensidzusammensetzung umfasst.

4. Tensidzusammensetzung nach mindestens einem der vorangehenden Ansprüche, welche ebenso eine wirksame solubilisierende Menge eines Glykols umfasst.

5. Pestizidzusammensetzung, umfassend ein von Glyphosphat-Herbizid verschiedenes Pestizid und eine Tensidzusammensetzung nach mindestens einem der vorangehenden Ansprüche.

6. Verfahren zur Regulierung des Wachstums von Unkräutern, umfassend das Anwenden bei den Unkräutern einer Herbizidzusammensetzung nach Anspruch 5, worin das Pestizid ein Herbizid ist.

7. Verwendung einer Verbindung, bei der es sich um ein sulfatiertes Polyoxyalkylenalkylphenol; ein Alkoholsulfat; ein Polyoxyalkylenalkoholsulfat: ein Monooder Dialkoholphosphat; ein Mono- oder Di-(polyoxyalkylenalkohol)-phosphat; Mono- und Di-(polyoxyalkylenalkylphenol)-phosphate, ein Polyoxyalkylenalkylphenolcarboxylat oder Polyoxyalkylenalkoholcarboxylat handelt; wobei die die Augenreizbarkeit reduzierende Verbindung bis zu etwa 60 Mole einer Alkylenoxidgruppe und Alkyl- und Alkoholgruppen mit 8 bis 20 Kohlenstoffatome enthält, zur Reduzierung der Augenreizbarkeit einer Tensidzusammensetzung, umfassend ein Polyoxyalkylenalkylamin, das mindestens 7 Mole einer Alkylenoxidgruppe enthält, oder einer Pestizidzusammensetzung, umfassend ein von Glyphosphat-Herbizid verschiedenes Pestizid und ein Polyoxyalkylenalkylamin, das mindestens 7 Mole einer Alkylenoxidgruppe enthält.

## Revendications

1. Composition tensioactive comprenant une polyoxyalkylènealkylamine contenant au moins 7 moles d'un groupe oxyde d'alkylène, et une quantité diminuant le pouvoir irritant pour les yeux d'un composé qui est un polyoxyalkylènealkylphénol sulfaté; un sulfate d'alcool; un sulfate de polyoxyalkylènealcool; un phosphate de mono- ou di-alcool; un phosphate de mono- ou di-(polyoxyalkylènealcool); des phosphates de mono- et di-(polyoxyalkylènealkylphénol); un carboxylate de polyoxyalkylènealkylphénol ou un carboxylate de polyoxyalkylènealcool; le composé diminuant le pouvoir irritant pour les yeux contenant jusqu'à 60 moles d'un groupe oxyde d'alkylène et des groupes alkyle et alcool ayant de environ 8 à environ 20 atomes de carbone; avec la condition que lorsque ledit composé est un ester phosphate de polyoxyalkylènealkyl ou alkylaryl-éther, la composition ne comprenne pas un quelconque agent tensioactif polyoxyalkylé non-ionique ou glycol supplémentaire.

2. Composition tensioactive selon la revendication 1, dans laquelle la polyoxyalkylènealkylamine est une amine de suif polyoxyéthylénée contenant jusqu'à 20 moles d'oxyde d'éthylène qui représente de 50 à 95 % en poids de la composition.

3. Composition tensioactive selon la revendication 2, dans laquelle l'amine de suif polyoxyéthylénée représente de 80 à 95 % en poids de la composition tensioactive.

4. Composition tensioactive selon l'une quelconque des revendications précédentes qui comprend également une quantité efficace pour favoriser la solubilisation d'un glycol.

5. Composition pesticide de matière comprenant un pesticide autre qu'un herbicide glyphosate et une composition tensioactive selon l'une quelconque des revendications précédentes.

6. Procédé pour la lutte contre la croissance des mauvaises herbes qui comprend l'application sur ces mauvaises herbes d'une composition herbicide selon la revendication 5 où le pesticide est un herbicide.

7. Utilisation d'un composé qui est un polyoxyalkylènealkylphénol sulfaté; un sulfate d'alcool; un sulfate de polyoxyalkylènealcool; un phosphate de mono- ou di-alcool; un phosphate de mono- ou di-(polyoxyalkylènealcool); des phosphates de mono- et di-(polyoxyalkylènealkylphénol); un carboxylate de polyoxyalkylènealkylphénol ou un carboxylate de polyoxyalkylènealcool; le composé diminuant le pouvoir irritant pour les yeux contenant jusqu'à environ 60 moles d'un groupe oxyde d'alkylène et des groupes alkyle et alcool ayant de 8 à 20 atomes de carbone, pour diminuer le pouvoir irritant pour les yeux d'une composition tensioactive comprenant une polyoxyalkylènealkylamine contenant au moins 7 moles d'un groupe oxyde d'alkylène, ou d'une composition pesticide comprenant un pesticide autre qu'un herbicide glyphosate et une polyoxyalkylènealkylamine contenant au moins 7 moles d'un groupe oxyde d'alkylène.
